# EUROPEAN PATENT SPECIFICATION

(11) **EP 1 937 581 B1**
(45) Date of publication and mention of the grant of the patent: **16.04.2014**
(21) Application number: 06757881.5
(22) Date of filing: 26.06.2006
(51) Int. Cl.: B63B 21/04, B66D 1/72, B63B 21/16, F16H 55/30

(54) **DEVICE FOR TRANSPORTING CHAINS**
VORRICHTUNG ZUM TRANSPORT VON KETTEN
DISPOSITIF POUR LE TRANSPORT DE CHAÎNES

(30) Priority: 07.07.2005 NO 20053322
(43) Date of publication of application: 02.07.2008
(73) Proprietor: I.P. Huse AS, 6487 Haroy (NO)
(72) Inventor: MOLNES, Kjetil, 6487 Haroy (NO)
(74) Representative: Acapo AS
(86) International application number: PCT/NO2006/000242
(87) International publication number: WO 2007/013812

(56) References cited:
- JP-A- 04 231 769
- NL-A- 8 502 758
- US-A- 36 087
- US-A- 2 075 524
- US-A- 5 205 793

## Description

The present invention relates to a device for transport of chain lengths of a variable link size according to the preamble of claim 1. US 325539 discloses such a device.

Chains that are built up of links are often used in industry. An example is the offshore industry, for example, onboard tugging boats and anchor handling boats that work with anchor lines for offshore installations. Another example is the metal industry, or other forms of industry. The chains that are used can be of many different sizes or diameters.

When such a chain shall be moved, there are solutions that are based, for one thing, on messengers that are adapted to specific chain dimensions, discs with carriers, or rollers. To use permanent messengers for each chain dimension is impractical and expensive. Discs or rollers with carriers have a poor gripping ability to pull different chains dimensions.

US 5,205,793 and US 5,275,379 describe devices for transport of chain lengths, where it is known that the device comprises at least one side plate and that the side plate is fastened to a shaft. US 5,205,793 further describes that the device has "catching arms" that are arranged on the side plates in a radial pattern. In US 5,275,379, varying chain sizes can be handled.

Thus, there is a need for a device to move chain lengths, either unloaded or loaded, which is suitable to move chains of different dimensions.

It is an aim of the present invention to meet this need. The present invention is characterised by a device according to the characteristic part of claim 1. Preferred embodiments are described in the dependent claims 2-6.

A device for moving chain lengths is provided by the present invention, where the same device can be used for different chain dimensions. The invention shall be described with reference to the enclosed figures.
Figures 1a and 1b show the principle solution according to the invention in its simplest form.
Figure 2 shows a principle solution of a preferred embodiment of the invention.
Figure 3 shows an embodiment of the invention that has been produced and tested.

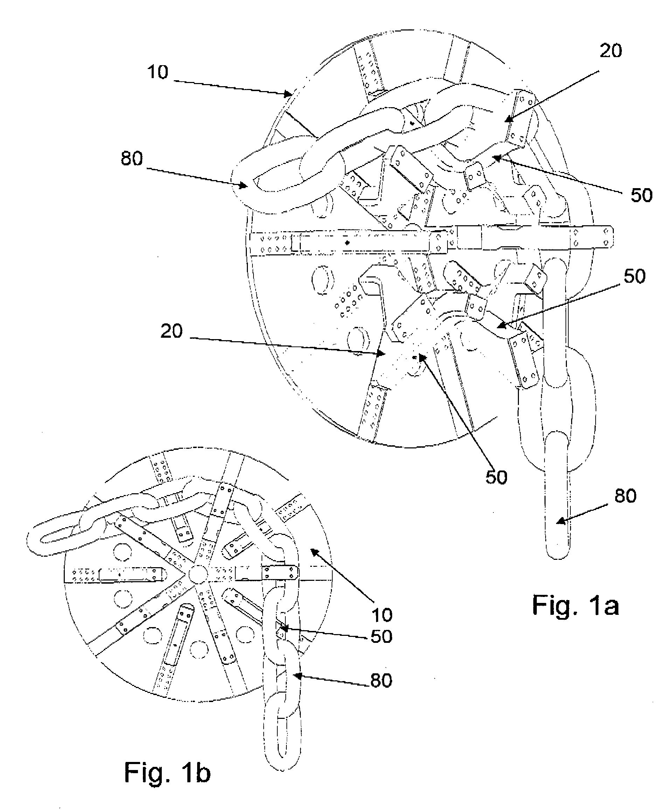

In the simplest embodiment as described in figure 1, the device comprises a first side plate 10 with fitted catching arms 20. The catching arms 20 can, for example, be fastened with the help of bolts through the first side plate. By arranging several bolt holes radially from the centre and out towards the edge, the catching arms 20 can be moved radially, and thus the device can be set up to accommodate different sized chain links. Each catching arm 20 has a carrying surface that carries one link of the chain that shall be moved, mainly in the middle of the link. According to the invention, the catching arms 20 are alternately arranged at an angle of approximately 45 degrees and at an angle of approximately 135 degrees in relation to the first side plate 10. Thus, the angle between the carrying surfaces 50 of each catching arm 20 in relation to the next catching arm is about 90 degrees. In this way, the links of the chain that are moved across the device retain their natural angle of about 90 degrees to each other.

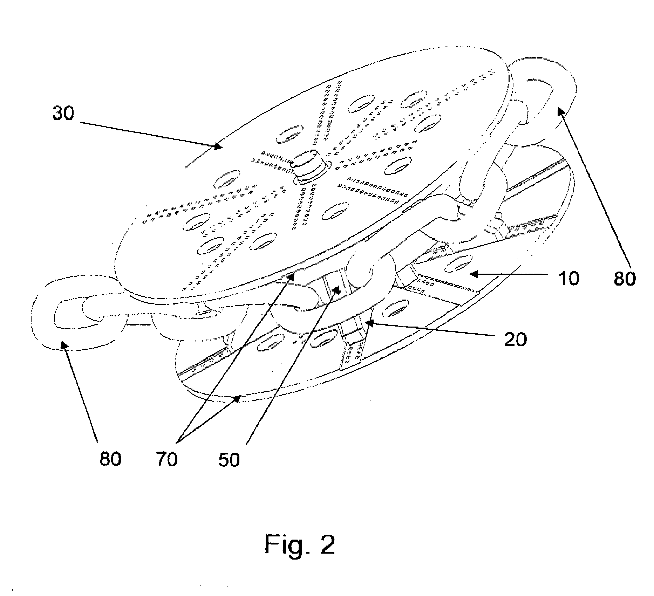

In a preferred embodiment of the invention, as depicted in figure 2, the device further comprises a second side plate 30. The second side plate 30 can ensure that the chain is held between the first side plate 10 and the second side plate 30. Furthermore, the second side plate ensures that the catching arms 20 can be arranged to be more stable. The total weight of such a solution does not need to be considerably higher than that for a solution without the second side plate, as the catching arms 20 can be made slimmer, as they are now fastened at both ends.

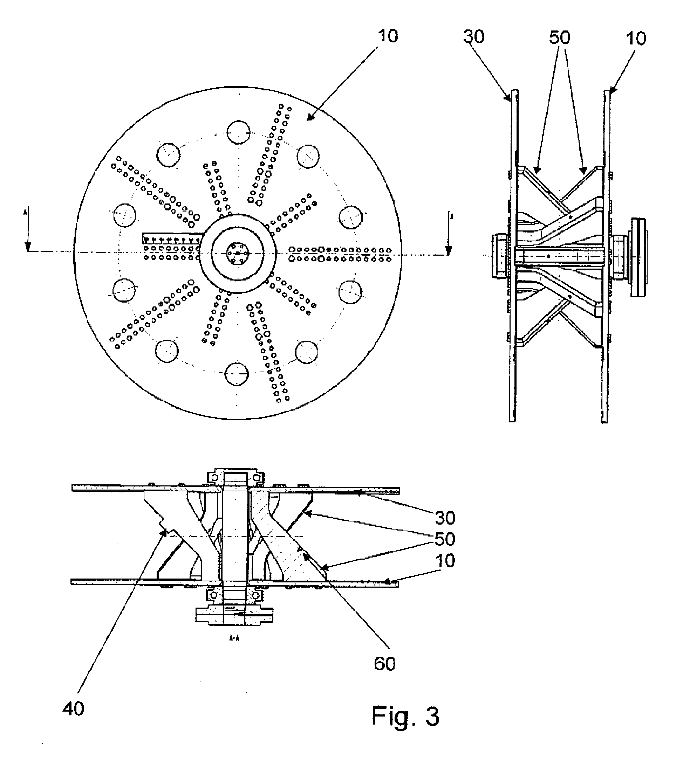

An adjusting screw hole 60 is shown in figure 3. In this adjusting screw hole 60, a bolt with an eye can be secured, so that the relevant catching arm can be pulled out from the centre of the side plate(s), for example, with the help of a crane.

The device according to the invention can be applied to pull up a loose chain, to pull up chains with possible loads, or other purposes where chains shall be moved or displaced.

In a preferred embodiment, the catching arms 20 can be positioned in a groove in the first and the second side plate to further increase the stability of the device.

To improve the grip on some types of chain, protrusions 40 in the middle of the carrying surface 50 of the catching arms 20 are arranged in one embodiment. The adjusting screw hole 60 will then preferably positioned in the middle of the protrusion 40.

A prototype according to the drawing in figure 3 has been made. After testing of the prototype, the results were very satisfactory. When a chain is lying on the ground, it lies naturally in an X-position. The device distinguishes itself, for one thing, in that the chain also travels across the wheel in this position. With known solutions, the chain will be pulled over a chain wheel in a + position rather that in an X position. Known types of chain wheels must therefore be fitted at an angle of approximately 45 degrees in relation to a flat ground to combat the chain's tendency to twist while it is led across the wheel. Such a device will clearly take up more space than a device the does not need to be tilted.

## Claims

1. Device for transport of chain lengths of varying link sizes, where the device comprises at least one first side plate (10) for fastening on a shaft, and at least four catching arms (20) each comprising a carrying surface (50) for a link of the chain, and which is arranged on the first side plate (10) in a radial pattern, where the carrying surface (50) of each catching arm (20) is set at an angle of about 90 degrees in relation to the carrying surface (50) of the next catching arm (20), wherein the catching arms (20) are arranged alternately at an approximately 45 degree angle and an approximately 135 degree angle in relation to the first side plate (10), **characterized in that** each catching arm (20) can be moved radially on the first side plate (10).

2. Device according to claim 1, wherein that the device further comprises a second side plate (30).

3. Device according to claims 1 or 2, wherein one or more of the catching arms (20) comprises a protrusion (40) in the middle of the carrying surface (50).

4. Device according to one or more of the preceding claims, wherein it is fitted to a drive appliance to actuate the moving of the length of chain.

5. Device according to one or more of the preceding claims, wherein it is fitted to rotate freely for the guiding of the chain.

6. Device according to one or more of the preceding claims, wherein radial grooves (70) are arranged in the first side plate (10) and in the second side plate (30), where the catching arms (20) can be moved in the radial grooves (70).

## Patentansprüche

1. Vorrichtung zum Transport von Kettenlängen unterschiedlicher Gliedergröße, wobei die Vorrichtung wenigstens eine erste Seitenplatte (10) zur Befestigung an einer Welle umfasst, und wenigstens vier Fangarme (20), welche jeweils eine Transport- bzw. Trage-Oberfläche (50) für ein Glied der Kette umfassen, und welche an der ersten Seitenplatte (10) in einem radialen Muster angeordnet ist, wobei die Trage-Oberfläche (50) jedes Fangarms (20) in einem Winkel von etwa 90 Grad in Bezug auf die Trage-Oberfläche (50) des nächsten Fangarms (20) eingestellt ist, wobei die Fangarme (20) alternierend in einem Winkel von etwa 45 Grad und einem Winkel von etwa 135 Grad in Bezug auf die ersten Seitenplatte (10) angeordnet sind, **dadurch gekennzeichnet, dass** jeder Fangarm (20) radial auf der ersten Seitenplatte (10) bewegt werden kann.

2. Vorrichtung nach Anspruch 1, wobei die Vorrichtung weiter eine zweite Seitenplatte (30) umfasst.

3. Vorrichtung nach Anspruch 1 oder 2, wobei einer oder mehrere der Fangarme (20) einen Vorsprung (40) in der Mitte der Trage-Oberfläche (50) umfasst/umfassen.

4. Vorrichtung nach einem oder mehreren der vorhergehenden Ansprüche, wobei sie an einem Antriebsgerät zur Betätigung der Bewegung der Kettenlänge angebracht ist.

5. Vorrichtung nach einem oder mehreren der vorhergehenden Ansprüche, wobei sie derart angebracht ist, dass sie sich zur Führung der Kette frei drehen kann.

6. Vorrichtung nach einem oder mehreren der vorhergehenden Ansprüche, wobei radiale Nuten (70) in der ersten Seitenplatte (10) und in der zweiten Seitenplatte (20) angeordnet sind, wobei die Fangarme (20) in den radialen Nuten (70) bewegt werden können.

## Revendications

1. Dispositif pour transporter des longueurs de chaîne de tailles de maillon variables, dans lequel le dispositif comprend au moins une première plaque latérale (10) destinée à être fixée sur un arbre, et au moins quatre bras d'accroche (20) comprenant chacun une surface de support (50) pour un maillon de la chaîne, et qui est agencée sur la première plaque latérale (10) selon un modèle radial, dans lequel la surface de support (50) de chaque bras d'accroche (20) est à un angle d'environ 90 degrés par rapport à la surface de support (50) du bras d'accroche (20) suivant,
dans lequel les bras d'accroche (20) sont agencés de manière alternée à un angle d'approximativement 45 degrés et un angle d'approximativement 135 degrés par rapport à la première plaque latérale (10),
**caractérisé en ce que** chaque bras d'accroche (20) peut être déplacé radialement sur la première plaque latérale (10).

2. Dispositif selon la revendication 1, dans lequel le dispositif comprend en outre une seconde plaque latérale (30).

3. Dispositif selon la revendication 1 ou 2, dans lequel un ou plusieurs des bras d'accroche (20) comprennent une saillie (40) au milieu de la surface de support (50).

4. Dispositif selon une ou plusieurs des revendications précédentes, dans lequel il est monté sur un appareil d'entraînement pour actionner le mouvement de la longueur de chaîne.

5. Dispositif selon une ou plusieurs des revendications précédentes, dans lequel il est monté pour tourner librement pour le guidage de la chaîne.

6. Dispositif selon une ou plusieurs des revendications précédentes, dans lequel des rainures radiales (70) sont agencées dans la première plaque latérale (10) et dans la seconde plaque latérale (30), dans lequel les bras d'accroche (20) peuvent être déplacés dans les rainures radiales (70).
